# EUROPEAN PATENT APPLICATION

(11) **EP 1 193 938 A1**
(43) Date of publication of application: **03.04.2002**
(21) Application number: 00610101.8
(22) Date of filing: 29.09.2000
(51) Int. Cl.: H04L 29/06

(54) **Method and system for transmitting data**

(71) Applicant: Telefonaktiebolaget L M Ericsson (Publ), 126 25 Stockholm (SE)
(72) Inventor: van der Zee, Martin, 7514 GA Enschede (NL); Heijenk, Geert, 7541 ZJ Enschede (NL)
(74) Representative: Boesen, Johnny Peder

(57) **Abstract**

A method and system for communicating delay sensitive data packets over the same link as less sensitive data packets, where the packets are divided into smaller segments prior to the transmission, where each data packet is assigned a priority, and where a high priority data packet may interrupt the transmission of a low priority data packet; a re-assembly scheme for an efficient re-assembly of data packets from the segments at the receiver and schemes for efficient recovery from transmission errors.

## Description

### FIELD OF THE INVENTION

This invention relates to the transmission of delay sensitive data over the same transmission channel as other data, which is less delay sensitive.

### BACKGROUND OF THE INVENTION

There are a number of relevant quality parameters for communication systems and the transmission of data. A communication system should, for example, be efficient and reliable, and in many cases a certain degree of interoperability with other systems is desired. Reliability is of particular concern in situations where the transmission channel is noisy, such as in wireless communication. In the art there are a number of known communication systems for Local Area Networks, Wide Area Networks or the Internet, and a number of known protocols and technologies such as Ethernet, X.25, or TCP/IP.

An example for wireless communication over a short-range radio link is the Bluetooth technology (see the "Specification of the Bluetooth System - Core" ver. 1.0B, dated December 1^{st}, 1999, available from www.bluetooth.com). This technology provides the possibility of reliable ad hoc connections for stationary and mobile communication environments and thus a high degree of interoperability. It is known from the Bluetooth technology to transmit data packets by dividing them into smaller segments and to reassemble the data packets at the receiver side. This, together with frequency hopping between the transmission of individual segments, provides a high degree of reliability.

A disadvantage of the known Bluetooth technology is that it provides so-called "best effort service", i.e. a service where the applications using that service are not guaranteed any quality of service. An application will receive whatever level of performance (e.g. end-to-end packet delay or loss) that the network is able to provide at that moment. This service may not be suitable for time-critical applications, e.g. multimedia applications.

In particular, the before mentioned disadvantage poses a problem when delay sensitive data is carried over the same link as other data e.g. best effort IP traffic. The delay sensitive data may experience a considerable delay when it has to wait for the completion of an ongoing transmission of a large packet. For delay sensitive applications such as real-time voice and video this may have a considerable impact on the end-to-end delay.

WO 00/20876 describes a communication system, which allows the interruption of lower priority packet transmission to transmit a higher priority packet first, before the transmission of the lower priority packet is resumed.

It is a disadvantage of the prior art system that an interrupt indication needs to be included in the packet that is interrupted in order to inform the receiver of the interrupt.

It is a further disadvantage of the prior art system that priority or type indication is transmitted to the receiver. In short this implies the need of additional signalling to allow the interruption of a packet transmission. Furthermore the receiver needs to be aware of the priority of the incoming packets.

Another disadvantage of the prior art system is that a reliable reconstruction of the interrupted packets at the receiver is not guaranteed.

A further disadvantage of the prior art system is that an efficient recovery from a transmission error is not guaranteed.

It is yet another disadvantage of the prior art system that considerable changes to existing protocols, such as the Bluetooth protocol, are necessary in order to implement the system.

### SUMMARY OF THE INVENTION

Therefore, it is an object of this invention to provide a method and a system for a better than best effort service over a noisy communication link.

It is an object of this invention to include Quality of Service functions in a best effort service in order to facilitate applications that require a better than best effort service.

It is a further object of the invention to provide an improvement of existing communication systems with minimal changes to the existing signalling.

It is yet another object of the invention to provide a method for reliably reassembling data packets at the receiver.

It is a further object of the invention to provide a method for recovering from transmission failures. This method includes rules to flush a re-assembly buffer from segments that cannot be reconstructed to a complete packet.

In a first aspect of the invention these and other objects are achieved by a method of communicating data packets from a transmitter to a receiver, the method comprising the steps of
dividing a first data packet of said data packets into a first set of segments;
transmitting the first set of segments by the transmitter;
receiving the first set of segments by the receiver;
storing the received first set of segments in a first storage means;
reassembling the first data packet from the stored first set of segments;
the method being characterised in that it further comprises the steps of
assigning a first priority level to the first data packet;
if, during the step of transmitting the first set of segments after the transmission of a first subset of the first set of segments, a second data packet is assigned a higher priority level than the first priority level, performing the steps of
   a) suspending transmitting the first set of segments;
   b) transmitting the second set of segments by the transmitter;
   c) receiving the second set of segments by the receiver;
   d) storing the received second set of segments in the first storage means;
   e) reassembling the second data packet from the stored second set of segments; and
   f) resuming the suspended transmission of the first set of segments;
deleting all segments of the first subset of segments, which are stored in the first storage means, from the first storage means upon occurrence of a predetermined event.

It is an advantage of the invention that the transmission of a data packet does not necessarily have to be completed before the transmission of another, higher priority data packet may start over the same communication link.

It is another advantage of the invention that the deletion of a subset of already transmitted segments from the first storage means, such as a buffer, at the receiver may be triggered by certain events. This allows a efficient re-assembly of data packets also in cases of transmission errors, even though the re-assembly only relies on little information received from the transmitter.

It is a further advantage of the invention that it does not rely on additional signalling in order to inform the receiver about the suspension of a transmission or the priority of the data packets.

It is another advantage of the invention that the length of the data packets may vary and that the invention is not restricted to a predefined number of packet sizes.

It is a further advantage of the invention that the transmitter does not need to maintain a counter of the number of interruptions.

The data packets may contain IP data traffic, real time data such as voice, music, video or control data.

The transmitter and receiver may be radio transmitter and receiver, respectively, for wireless communication, routers on two LANS connected by a link, or any other transmitter/receiver pair capable of communicating data packets. The transmitter and receiver may be part of a network with multiple nodes, and they may be part of respective electronic equipment.

The term electronic equipment includes computers, such as stationary and portable PCs, stationary and portable radio communication equipment. The term portable radio communication equipment includes all equipment such as mobile telephones, pagers, communicators, i.e. electronic organisers, smartphones or the like.

The first storage means may for example be a separate physical memory in the receiver or a, possibly dynamically, allocated part of the memory of a computer processor.

A data packet may be divided into one or more segments depending upon the size of the data packet and the size of the segments. A segment may be further divided into smaller parts prior to the transmission.

Another advantage of the invention is that it only requires small changes to existing components and protocols. Changes to the error control procedures and additional signalling messages may not be necessary.

In a preferred embodiment the step of reassembling a selected one of the first and the second data packets further comprises the step of selectively deleting the corresponding first or second set of segments from the first storage means. This gives the advantage that all segments of a set of segments are deleted from the storage means at the receiver immediately after a successful re-assembly of the corresponding data packet. Segments of other sets of segments, whose transmission may have been suspended, are preferably not deleted from the storage means.

In a preferred embodiment the step of transmitting the second set of segments by the transmitter is completed before the step of resuming the suspended transmission of the first set of segments is initiated.

Furthermore, if after the step of transmitting the second set of segments by the transmitter there are suspended transmissions of a plurality of sets of segments pending, the plurality of sets of segments comprises a set of segments with highest priority and the suspended transmission of the set of segments with highest priority may be resumed.

In a further preferred embodiment of the invention the step of dividing a selected one of the first and second data packets into the corresponding first or second set of segments further comprises the step of storing at least a part of the corresponding first or second set of segments in a second storage means, and if during the step of transmitting the second set of segments a predetermined transmission timeout event occurs, all segments of the second set of segments and of the first set of segments, which are stored in the second storage means, are deleted from the second storage means.

A transmission timeout event may for example be triggered if the transmission of a segment is not succesfully completed within a predetermined timeout limit, i.e. a predetermined period of time. Such an event may also be triggered by known error control mechanisms or by other software or hardware components of the transmitter.

It is an advantage of the invention that it comprises simple transmission rules. This allows for an efficient re-assembly of data packets by simple re-assembly rules, and an efficient recovery from transmission errors.

It is an advantage of the present invention that it does not rely upon additional signalling between the transmitter and the receiver in order to handle the suspending and resuming of transmission of data packets with different priority.

When the first and second priority levels are selected from a set of priority levels comprising a number of possible priority levels and the first storage means is adapted to store at least a predetermined number of sets of segments of a predetermined size, the predetermined number of sets of segments corresponding to the number of possible priority levels, it may be ensured that the first storage means has sufficient capacity to store subsets of segments corresponding to suspended transmissions.

In a preferred embodiment of the invention the step of transmitting a selected one of the first and second sets of segments comprises the step of storing at least one segment of the corresponding first or second set of segments in a third storage means; and if a predetermined transmission timeout event occurs, all segments of the corresponding first or second set of segments, which are stored in the third storage means, are selectively deleted from the third storage means.

This provides the advantage that suspended transmissions of lower priority data packets may be resumed after a transmission timeout during the transmission of a high priority data packet.

When each priority level of said number of possible priority levels corresponds to a respective predetermined timeout limit, different timeout limits may be defined for data packets of different priority.

In another preferred embodiment of the invention, if during the step of transmitting a selected one of the first and second set of segments a predetermined transmission timeout event occurs, the transmitter sends a notification to the receiver.

The transmission timeout event may be triggered by an elapsed timer indicating that a predetermined timeout period has run out.

The notification may be encoded into a segment which is transmitted after the predetermined transmission timeout event has occurred.

The notification may be encoded into the header part of a segment which is transmitted after the predetermined transmission timeout event has occurred, for example as '00' in an L_CH code of an ACL payload header.

At the receiver the notification may be encoded as '00' in an L_CH code of a packet boundary field of a Baseband packet.

The notification of the receiver about a transmission timeout may be used by the receiver to recover from a transmission error.

In a preferred embodiment the predetermined event is the reception of the above mentioned notification by the receiver, and when the notification is received by the receiver all segments stored in the first storage means are deleted from the first storage means.

It is an advantage of the invention that subsets of segments which are stored in the storage means and which correspond to failed transmissions may be deleted from the storage means, allowing recovery from a transmission failure.

In yet another preferred embodiment the predetermined event is the reception of an initial segment of a third set of segments by the receiver when the number of subsets of segments which are stored in the first storage means corresponds to the number of possible priority levels.

It is a further advantage of the present invention that it provides a re-assembly scheme that allows an efficient recovery from a transmission failure even if no notification about the transmission failure is transmitted from the transmitter to the receiver.

An indication whether a segment is an initial segment may be included in the header part of each segment. The indication of a start of a new data packet may also be included in any other segment of a set of segments or it may for example be transmitted as a separate segment. Including the information in the initial element has the advantage that the information may be utilised by the receiver as early as possible without requiring the transmission of additional segments.

In a second aspect of the invention the above objects are achieved by a communication system for communicating data packets from a transmitter to a receiver, the system comprising
first processing means adapted to divide a first data packet of said data packets into a first set of segments;
transmitting means adapted to transmit the first set of segments;
receiving means adapted to receive the first set of segments;
first storage means adapted to store the received first set of segments;
second processing means adapted to reassemble the first data packet from the stored first set of segments;
characterised in that
the system further comprises third processing means adapted to assign a first priority level to the first data packet;
the transmitting means is adapted to suspend the transmission of the first set of segments after a first subset of the first set of segments has been transmitted, to transmit a second set of segments corresponding to a second data packet of said data packets with a higher priority level than the first data packet, and to resume the suspended transmission of the first set of segments; and
the second processing means is adapted to delete all segments of the first subset of segments, which are stored in the first storage means, from the first storage means upon occurrence of a predetermined event.

The various processing means claimed may be digital processors, for example special purpose processors or any suitably adapted known processor or any combination thereof. They may be adapted to represent one or more layers of a layered communication protocol, for example the link layer of an OSI system or the L2CAP layer of a Bluetooth system. The third processing means may be a part of the first processing means or a separate software or hardware component of the transmitter.

The transmitting means may be a radio transmitter or any other transmitter adapted to transmit within a portion of the electromagnetic spectrum. It may represent a layer of a layered communication protocol such as the physical layer or the Baseband layer of a Bluetooth system. Correspondingly, the receiving means is adapted to suitably correspond to the transmitting means.

The various storage means claimed may be buffers at the receiver and the transmitter, respectively. They may be memory allocated by a software process, or they may be physical memory electrically connected to a processor.

In a third aspect of the invention the above objects are achieved by an apparatus for receiving data packets, the apparatus comprising
receiving means adapted to receive a first set of segments of a first data packet of said data packets;
first storage means adapted to store the received first set of segments;
first processing means adapted to reassemble the first data packet from the stored first set of segments;
characterised in that
the first storage means is adapted to store a plurality of sets of segments; and
the first processing means is adapted to delete a predetermined selection of segments of the first set of segments prior to reassembling the first data packet, if a predetermined event occurs.

In a fourth aspect of the invention the above objects are achieved by an apparatus for transmitting data packets, the apparatus comprising
first processing means adapted to divide a first data packet of said data packets into a first set of segments;
transmitting means adapted to transmit the first set of segments;
characterised in that
the apparatus further comprises second processing means adapted to assign a first priority level to the first data packet;
the transmitting means is adapted to suspend the transmission of the first set of segments after a first subset of the first set of segments has been transmitted, to transmit a second set of segments corresponding to a second data packet of said data packets with a higher priority level than the first data packet, and to resume the suspended transmission of the first set of segments.

If should be emphasised that the terms "comprises" and "comprising" when used in this specification is taken to specify the presence of the stated features, integers, steps or components but do not preclude the presence or addition of one or more other features, integers, steps or components or groups thereof.

The invention will be explained more fully below in connection with preferred embodiments and with reference to the accompanying drawings.

### BRIEF DESCRIPTION OF THE DRAWINGS

Figure 1 schematically shows a first embodiment of the invention;
figure 2 schematically shows the packet segmentation at the transmitter and re-assembly at the receiver corresponding to the first embodiment;
figure 3 schematically shows a high priority packet interrupting a low priority packet in the first embodiment;
figure 4 schematically shows the operation of the first embodiment of the invention when there is a flush timeout;
figure 4a schematically shows a flush timeout at the Baseband layer transmitting side;
figure 4b schematically shows how the Host Controller buffer at transmitting side is flushed and an HCI Flush_Occured event is generated to the L2CAP layer;
figure 4c schematically shows how the L2CAP segmentation buffer is flushed;
figure 4d schematically shows how the first segment with the flush timeout indication is received at the Baseband layer;
figure 4e schematically shows how the first segment with the flush timeout indication is transferred over the HCI interface; and
figure 5 schematically shows a partial flush of the L2CAP re-assembly buffer in a second embodiment of the invention.

### DETAILED DESCRIPTION OF THE PREFERRED EMBODIMENTS

In the following, two embodiments of the invention will be described based on a Bluetooth network. It is understood that a person skilled in the art will be able to implement the embodiment in connection with other communication protocols.

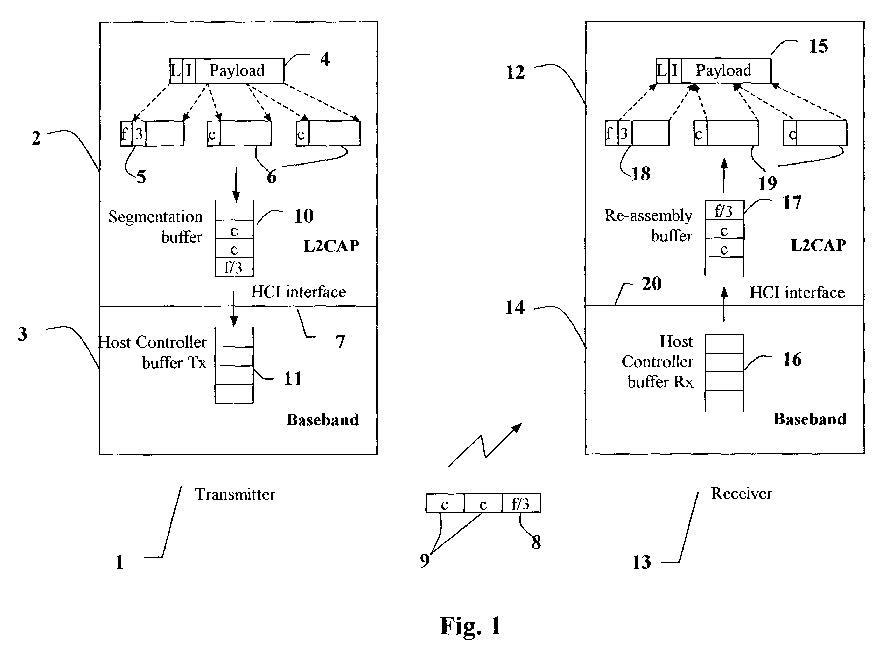

Fig. 1 schematically shows a transmitter 1 and a receiver 13 according to a first embodiment of the invention. The transmitter 1 and the receiver 13 may be known Bluetooth radios, preferably operating in the ISM band and 2.4 GHz. They implement different layers of a layered communication model. The Bluetooth specification defines two link types, one of which are the Asynchronous Connection-Less (ACL) links, which in the known Bluetooth technology provide best effort traffic. The Bluetooth technology comprises a Logical Link Control and Adaptation Protocol or L2CAP layer 2, which according to this embodiment are implemented as respective software components in the digital processors of the trasmitter 1 and the reciver 13, respectively.

At the transmitter, the L2CAP layer 2 adapts protocols of higher layers (not shown) to the Bluetooth Baseband layer 3. An important function of the L2CAP layer 2 is to support segmentation and re-assembly. The L2CAP layer 2 accepts a payload from the higher layers up to a specified Maximum Transmission Unit (MTU). The minimum MTU is 48 bytes and the maximum MTU is 65,535 bytes. The L2CAP layer 2 generates an L2CAP packet 4 by appending a four-byte header to this payload consisting of a 2 bytes Length field, indicating the L2CAP payload size, and a 2 bytes Channel identifier. The Length field and the Channel Identifier field of an L2CAP packet 4 are denoted as 'L' and 'I' respectively in figure 1.

An L2CAP packet 4 is segmented into smaller segments 5-6, in order to fit into a physical layer packet. In the Bluetooth specification the segments of data transferred over the HCI interface 7 do not have to match with the payload of the packets 8-9 of the Baseband 3. The Link Manager in the Baseband layer 3 divides the segments over the Baseband payload. In this embodiment, however, it is assumed that a segment matches with a Baseband payload. The segments 5-6 are buffered in a segmentation buffer 10 in the L2CAP layer 2 before they are transferred over the HCI interface 7 to the underlying Host Controller buffer 11 in the Baseband 3, from where they are transmitted over a radio link to the receiver 13 as corresponding Baseband packets 8-9.

In the header of each Baseband packet 8-9 it is indicated whether the corresponding segment 5-6 is the first 5 or a Continuation segment 6 of the original L2CAP packet 4, indicated by 'f' and 'c' in Figure 1, respectively. This sequencing information is carried in two bits, denoted as L_CH code, in the header of the Baseband packet 8-9. Table 1 shows the L_CH codes in an ACL payload header of the known Bluetooth protocol.

**Table 1**

| L_CH code in ACL payload header according to the known Bluetooth specification. | |
|---|---|
| L_CH code | Information |
| 00 | Undefined |
| 01 | Continuation segment of an L2CAP packet |
| 10 | first segment of an L2CAP packet |
| 11 | LMP message |

The first segment 5 of an L2CAP packet 4 contains the L2CAP length field. Dependent on the size of the L2CAP packet 4, it is segmented into one or multiple segments 5-6. In the example of figure 1, the L2CAP packet is segmented into three segments: a first segment 5 indicating the length of the L2CAP payload and two Continuation segments 6. In figure 1 the length is denoted in number of segments for readability: three segments in the example. The actual size may be specified in bytes.

A segment 5-6 can be transmitted in a single- or multi-slot Baseband packet 8-9. The re-assembly procedure implemented in the corresponding L2CAP layer 12 at the receiver 13 assumes that the underlying Baseband layer 14 provides reliability and preserves the ordering of the L2CAP segments 5-6. For this purpose the Baseband packet header contains a SEQN bit, which is alternated for each new Baseband packet transmission with a CRC check i.e. all ACL packet formats except AUX. This allows the Baseband receiver 14 to detect duplicate packets.

Furthermore the Baseband packet header contains an ARQN bit, which is used in the reverse direction to indicate a positive or negative acknowledgement of the previous transmission. The length field is used as a consistency check during re-assembly of the L2CAP packet 15 at the receiver 13.

For each ACL link a flush timeout is defined which defines a timeout limit, i.e. a maximum time period during which re-transmission attempts are allowed. The flush timeout is specified in ms. A flush timeout of 1 ms indicates that no re-transmissions are allowed and a flush timeout of all one's indicates an infinite number of re-transmissions is allowed i.e. re-transmit until the link is lost. When there is a flush timeout the pending segments of the L2CAP packet 4 that failed are flushed from the Host Controller buffer 11. When the next L2CAP packet 4 is already stored in the Host Controller buffer 11, then transmission is continued with this L2CAP packet. Otherwise all subsequent Continuation segments, which are stored in the Host Controller buffer 11 for this ACL link, are flushed, until a new first segment 5 for this ACL link is received. When there was a flush timeout at the Host Controller buffer 11, this can be indicated to the L2CAP layer 2 by means of an HCI Flush_Occurred event. Furthermore the L2CAP layer 2 can trigger a flush of the Host Controller buffer 11 by issuing an HCI Flush command. However, the HCI Flush command flushes the whole content of the Host Controller buffer.

The transfer of segments from the L2CAP segmentation buffer 10 to the Host Controller buffer 11 is controlled by the HCI Read_buffer_size command and the HCI Number_of_Completed_packets event. With the Read_buffer_size command the L2CAP layer 2 learns about the size of the Host Controller buffer 11 for this ACL link: the maximum size of ACL Data packets that is allowed and the maximum number of ACL Data packets that can be stored in the Host Controller buffer 11 for this ACL link. With the HCI Number_of_Completed_packets event, the Baseband layer 3 signals the status of the transmission process to the L2CAP layer 2. The L2CAP layer 2 preferably takes care that there is no overflow of the Host Controller buffer 11.

At the receiver 13 the transfer of segments from the Host Controller buffer 16 to the L2CAP re-assembly buffer 17 is performed in a similar way. A segment is transferred from the Baseband layer 14 to the L2CAP 12 with an HCI Data Packet. The HCI Data Packet contains a two-bit Packet_Boundary_Flag, which indicates whether this segment is the start of an L2CAP packet i.e. first segment 18 or a Continuation segment 19 as listed in Table 2 for the known Bluetooth specification.

**Table 2**

| Packet_Boundary_Flag field of HCI Data Packet according to the known Bluetooth specification. | |
|---|---|
| Value | Parameter Description |
| 00 | Reserved for future use |
| 01 | Continuation segment of an L2CAP packet |
| 10 | first segment of an L2CAP packet |
| 11 | Reserved for future use |

The known Bluetooth specification mandates that L2CAP packets 4 over the same ACL link are transmitted sequentially i.e. an L2CAP transmission is completed before a new L2CAP transmission may start. Note that L2CAP segments transmitted on different ACL links i.e. from different Bluetooth devices can be transmitted interleaved. Furthermore Link Manager Protocol (LMP) signalling has priority over L2CAP transmissions i.e. an LMP message shall not be delayed by L2CAP transmissions, although Baseband re-transmissions may delay an LMP message.

The before mentioned limitation poses a problem when delay sensitive data is carried over the same ACL link which is used to transfer other data e.g. Best effort IP traffic. The delay sensitive data experiences a considerable delay when it has to wait for the completion of an ongoing transmission of a large L2CAP packet. The minimum MTU size that needs to be supported by an Internet host is 576 bytes, but in many cases the MTU size is larger (e.g. 1,500 bytes Ethernet). The actual transmission time of the IP packet is mainly determined by the Baseband packet format, the poll frequency and the re-transmission overhead. In practical cases the transmission time is in the order of tens of milliseconds.

According to this embodiment of the invention an L2CAP packet 4 is segmented and all or some of the resulting segments 5-6 may temporarily be stored in the segmentation buffer 10 in the L2CAP layer 2 before they are transferred to the Baseband Host Controller buffer 11. The intermediate storing may be necessary, because the Host Controller buffer 11 may not be able to accept the complete L2CAP packet 4 at once. There is a separate segmentation buffer 10 per ACL link.

At the receiver 13 according to this embodiment of the invention there is a separate re-assembly queue 17 on the L2CAP layer 12 per ACL link. A new L2CAP segment 18-19 is added to the tail of the re-assembly queue 17. Each time a segment is added a re-assembly attempt is made. The re-assembly attempt is successful when all and the last segment of the corresponding L2CAP packet 15 have been received correctly. The re-assembly attempt is completed before the next segment is received and the reassembled L2CAP packet 15 is removed from the queue. The length field is used for consistency check and the transmitter 1 preserves the ordering of the L2CAP segments.

According to this embodiment of the invention each L2CAP packet 4 has assigned a priority level i, where i ∈ [1, 2, .., N]. This priority level is assigned locally at the transmitting side. This priority level is used at the transmitter 1 to schedule the transmission of L2CAP segments 5-6. The receiver 13 is not aware of the priority of the L2CAP packets. The total number of priority levels is defined by N.

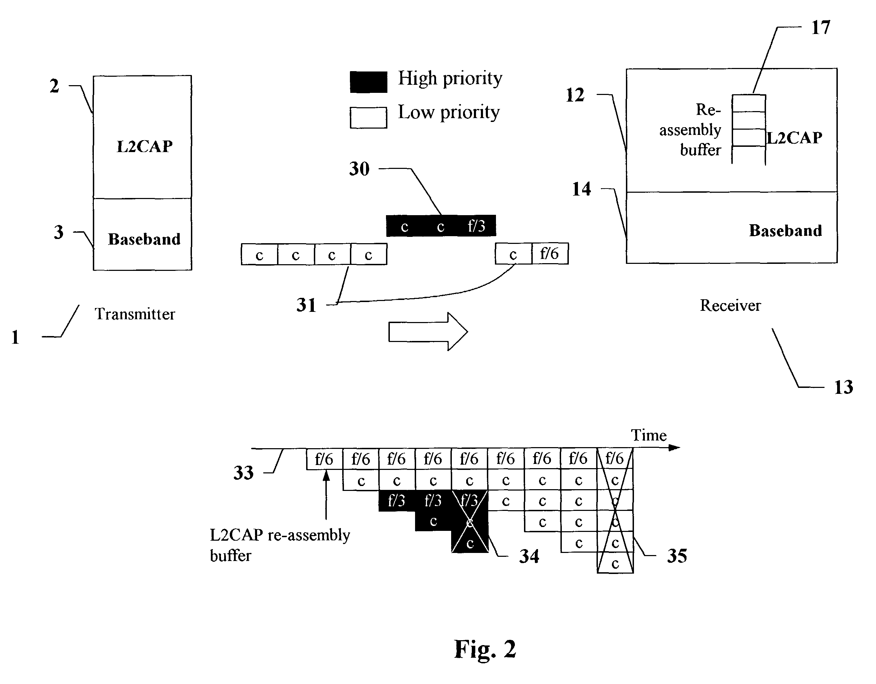

Now referring to Figure 2, in this embodiment of the invention an L2CAP packet may interrupt the transmission of another L2CAP transmission on the same ACL link only when it has a higher priority. This higher priority transmission is completed before the suspended transmission is resumed. Given these transmission rules a single re-assembly buffer 17, where incoming segments are buffered at the end of the queue, can facilitate re-assembly. This is exemplified in figure 2, where a low priority L2CAP packet 31 is interrupted by a high priority packet 30, which completes transmission first, before the suspended transmission is resumed. In the upper half of the figure the L2CAP segments 30-31 are depicted being transmitted from transmitter 1 to the receiver 13. In the lower part of figure 2 the evolution of the content of the L2CAP re-assembly buffer 17 is depicted with time evolving from left to right. At an initial time 33 the buffer is empty. Each time a new segment is added to the buffer a re-assembly attempt is made. When the re-assembly attempt succeeds, the L2CAP packet is removed from the buffer, indicated by a cross 34 for the high priority packet 30 and a cross 35 for the low priority packet 31, respectively.

The above re-assembly procedure is quite simple when there is no loss on the air-interface. However special attention needs to be paid when there is a flush timeout.

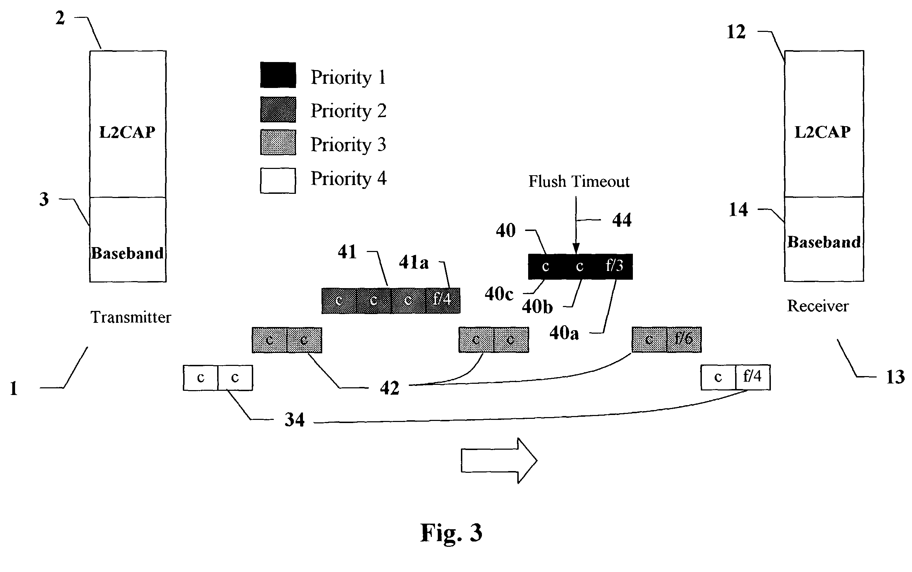

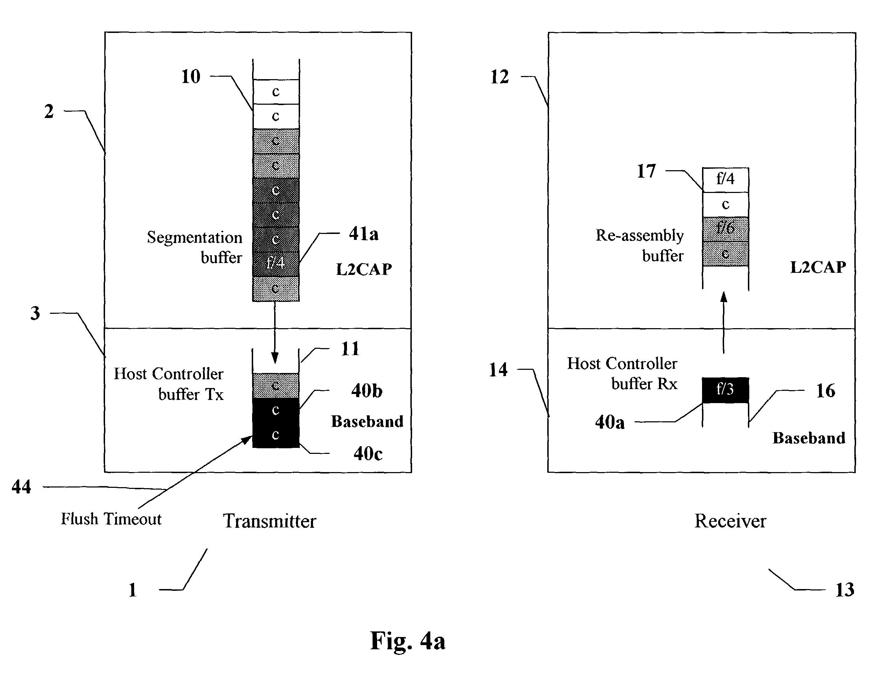

The operation with a flush timeout is exemplified in the figures 3 and 4a-d. Figure 3 shows an embodiment of the invention with four priority levels. Figure 3 schematically shows a situation where four L2CAP packets 40-43 are transmitted. The packets 42-43 are suspended in order to allow the transmission of the highest priority packet 40. A flush Timeout occurs during the transmission of packet 40, as indicated by the arrow 44 in figure 3. The packet 40 contains a first segment 40a and two continuation segments 40b-c.

In figures 4a-d, snapshots of the content of the buffers for each step in the recovery from the flush timeout described in relation to figure 3 are shown.

Figure 4a shows the situation at the time when the flush timeout occurs at the Baseband layer 3 of the transmitter 1. At this time a subset of the segments corresponding to the L2CAP packets 42-43 are stored in the re-assembly buffer 17, and the first segment 40a of the packet 40 is stored in the Host Controller buffer 16 at the receiver 13. At the transmitter side 1, two remaining segments 40b-c of the packet 40 are still stored in the Host controller buffer 11 together with a segment of packet 42. all remaining segments of the pending packets 41-43 are stored in the segmentation buffer 10.

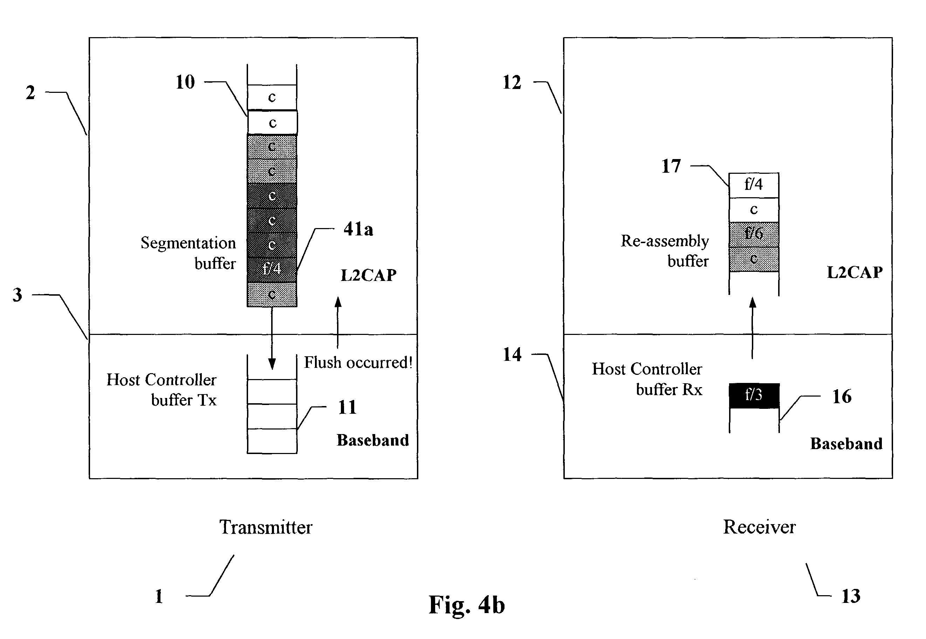

Referring to figure 4b, a flush timeout flushes the Host Controller buffer 11 at the transmitter 1. But to recover from a flush timeout also the segmentation buffer 10 and the re-assembly buffer 17 at the respective L2CAP layers 2,12 should be flushed. Thus, at the transmitter 1, the event of a flush timeout is signalled to the L2CAP layer 2 via the normal HCI Flush Occurred event.

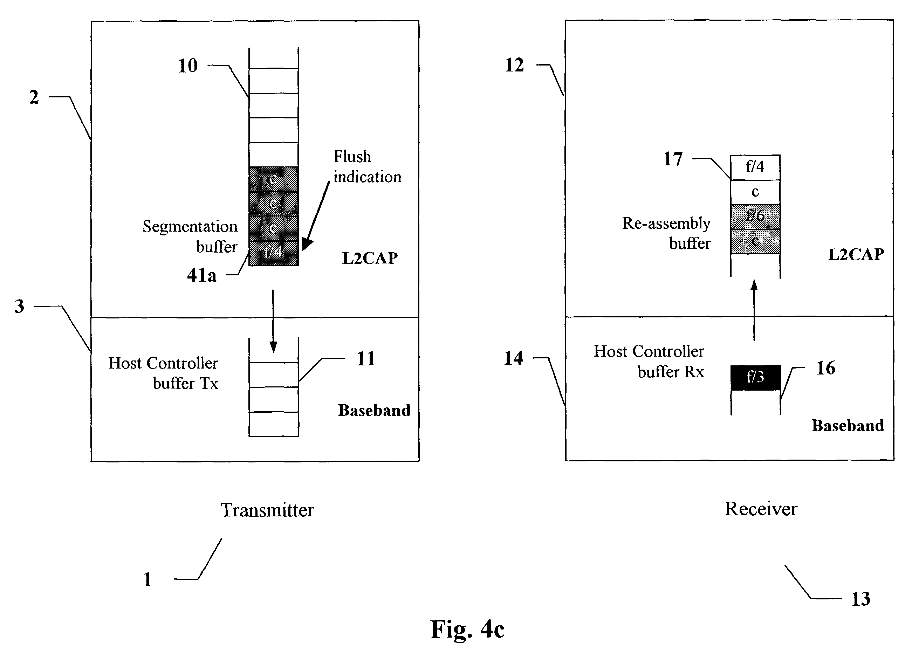

Referring to figure 4c, this event will flush the segmentation buffer 10 with L2CAP packets, for which segments have been transferred to the Baseband layer 3, i.e. in this example segments from packets 42-43. The receiving side 13 is still unaware of the flush timeout. Furthermore, according to the first embodiment of the invention, the flush timeout event is signalled over the air-interface to the receiving side 13. To signal the event of a flush timeout, unused bits of the L_CH code field of the ACL payload header are used, as listed in Table 3.

**Table 3**

| L_CH code in ACL payload header according to a first embodiment of the invention. | |
|---|---|
| L_CH code | Information |
| 00 | first segment of an L2CAP packet and a flush timeout occurred at the transmitting side |
| 01 | Continuation segment of an L2CAP packet |
| 10 | first segment of an L2CAP packet |
| 11 | LMP message |

The first segment 41a of the L2CAP packet following the flush timeout thus carries a flush timeout indication to the receiving side 13.

It is understood that there are other ways of sending a flush timeout indication over the air-interface. For example the L-CH code '00' could indicate the presence of an 'extended' payload header. This extended payload header among other things may contain the flush timeout indication. Another possibility is to define a new Link Manager Protocol (LMP) signalling message which may indicate a flush timeout indication to the remote side.

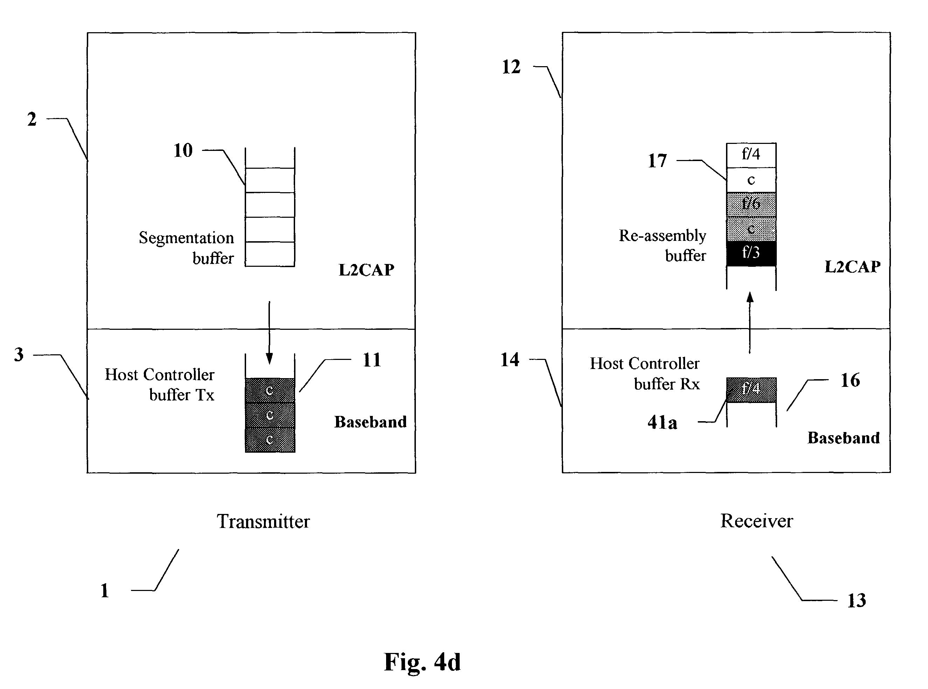

Now referring to figure 4d, when the Baseband 14 at the receiver 13 receives this flush timeout indication, the re-assembly buffer 17 is polluted with segments belonging to packets 40, 42 and 43 which will fail re-assembly due to the flush timeout.

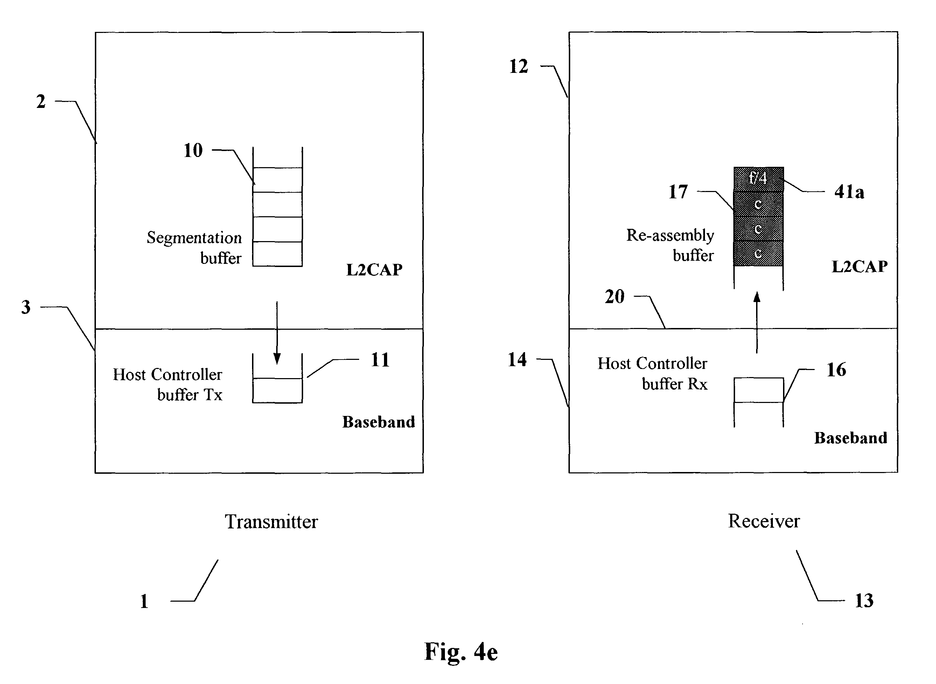

Referring to figure 4e, the flush timeout indication is transferred over the HCI interface 20 to the L2CAP layer 12. The Baseband layer 14 transfers the flush timeout indication in the Packet Boundary field of the associated HCI Data Packet to the L2CAP layer 12, as listed in Table 4.

**Table 4**

| Packet_Boundary_Flag field of HCI Data Packet according to a first embodiment of the invention. | |
|---|---|
| Value | Parameter Description |
| 00 | first segment of an L2CAP packet and a flush timeout occurred at the transmitting side |
| 01 | Continuation segment of an L2CAP packet |
| 10 | first segment of an L2CAP packet |
| 11 | Reserved for future use |

When the L2CAP layer 12 receives a first segment 41a with a flush timeout indication, L2CAP 12 flushes the associated re-assembly buffer 17 before this segment 41a is buffered. The effect of this procedure is that the transmission of the new L2CAP packet 41 following a flush timeout will be received correctly in the re-assembly buffer 17.

When there is a flush timeout the transmission of several ongoing L2CAP packets transmission can fail. The maximum number of L2CAP packet transmissions that can fail due to the flush timeout is equal to the total number of priority levels. Thus by limiting the number of priority levels, the number of L2CAP packet transmissions that can fail can be reduced.

Instead of a single flush timeout setting per ACL link it may be advantages to define a plurality of flush timeout settings, for example one flush timeout setting per priority level. In a scenario where the low priority traffic is TCP/IP traffic and the high priority traffic is audio transmission, then the low priority traffic prefers possibly an infinite setting, while the high priority traffic prefers a finite setting. Setting the flush timeout to infinite can cause audio frames to be delayed by TCP/IP re-transmissions, which can subsequently cause the transmission of an audio frame while its 'lifetime' has expired. Setting the flush timeout to finite possibly decreases the TCP/IP performance when TCP segments are dropped due to a limited number of re-transmissions. A flush timeout setting per priority level facilitates serving multiple traffic flows.

According to the first embodiment of the invention, and referring to fig. 4a, the Host Controller buffer 11 is flushed with the L2CAP packet 40 which has failed, and all subsequent Continuation segments which are being offered to the Host Controller buffer 11 will be flushed until there is a first segment 41a again. Thus when the transmission of a higher priority L2CAP packet 40 fails i.e. is flushed, then Continuation segments of the lower priority packet 42 will also be flushed. The effect of a Flush on lower priority packets may be solved at the L2CAP layer 2, by re-transmitting the lower priority packets 42-43 at the L2CAP layer. It is understood that there are other ways of ensuring correct transmission of pending lower priority packets in the event of a flush timeout. For example may multiple flush events be defined, for example one flush timeout event per priority level. Then a flush of the host control buffer 11 may be restricted to segments of a specific priority and a re-transmission of lower priority packets may be avoided. In this case the baseband layer at the transmitter has to be aware of the priority of the segments.

In the following, the transmission and re-assembly rules according to the first embodiment of the invention described above are summarized.

An L2CAP packet may only interrupt the ongoing transmission of a lower priority packet over the same ACL link.

When an L2CAP packet interrupts the transmission of a lower priority packet, then its transmission is completed, unless this L2CAP packet is interrupted by a higher priority packet. In other words: any higher priority transmission is completed before a lower priority transmission is resumed.

When an L2CAP transmission is completed, and there are multiple pending L2CAP transmissions, i.e. transmissions, which have been interrupted, then the L2CAP transmission with the highest priority is resumed.

When there is a HCI Flush Occured event from the Baseband layer, those L2CAP segments are flushed from the ACL segmentation buffer associated with this ACL link for which segments have already been transferred to the Baseband layer.

Whenever an HCI Data Packet with Packet Boundary field '00' is received, the re-assembly buffer associated with this ACL link is flushed before this segment is queued.

Whenever an HCI Data Packet with Packet Boundary field '10' is received, the re-assembly buffer associated with this ACL link is not flushed before this segment is queued.

The L2CAP re-assembly buffer is able to store at least N maximum sized L2CAP packets, with N the number of priority levels.

With the L2CAP rules according to this embodiment of the invention the re-assembly buffer is flushed only when there has been a flush timeout at the transmitter. These L2CAP rules give sufficient guarantee that the L2CAP buffer will not get polluted.

According to the first embodiment of the invention, the following requirements for the Baseband layer apply to packets with a CRC check.

When a flush timeout has occurred the first segment of the next L2CAP packet transmission on the ACL link has the L_CH code set to '00'. Otherwise the first segment of an L2CAP packet has L_CH code set to '10'.

A re-transmission is completed before there is a new transmission over the same ACL link. Completion is either a successful transmission or a flush timeout.

When there is a flush timeout, the Host Controller buffer is flushed as normal and the L2CAP layer is informed by means of the HCI Flush Occured event.

When a first segment with L_CH code '00' is received, the associated Packet Boundary field of the HCI Data Packet is set to '00'. When a first segment with L_CH code '10' is received the Packet Boundary field is set to '10'.

When a first segment, which contains a flush timeout indication, is not acknowledged within the flush timeout period and consequently flushed, the subsequent first segment will contain a flush timeout indication. This is repeated until the first segment carrying a flush timeout indication is acknowledged by the receiver.

It is understood that a high priority packet may be allowed to interrupt an ongoing re-transmission of a segment. In that case a separate error control procedure (i.e. ARQN/SEQN scheme) per priority level may be implemented. When a re-transmission fails, it may be most likely that also the new interrupting transmission will fail, i.e. the gain when interrupting a re-transmission may at best be one frame delay. However, in case of multi-slot usage the gain may be higher. The probability of a multi-slot packet to fail is higher than for a single-slot packet. Thus it may be advantages to interrupt the ongoing re-transmissions of a five-slot packet to allow new single slot packet to be transmitted first.

In a second embodiment of the invention in a system as shown in figure 1, the Flush indication is not transmitted over the air-interface. This has the advantage that no changes to the known Baseband layer are necessary.

In this embodiment of the invention a partial flush of the L2CAP re-assembly buffer is performed whenever a new first segment is stored in the L2CAP re-assembly buffer and there are already a number of first segments stored in the L2CAP re-assembly buffer equal to the number of priorities.

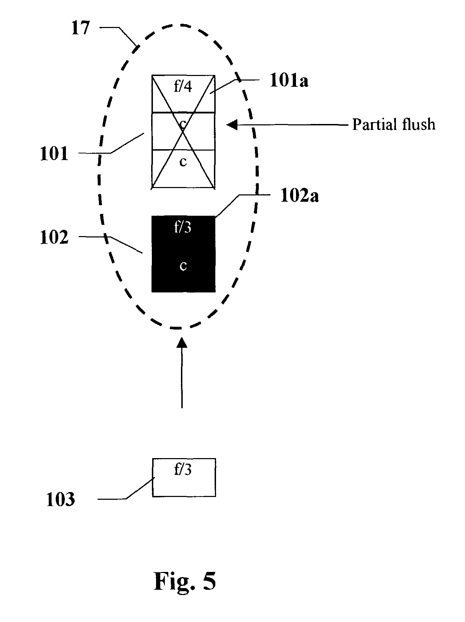

In figure 5, the re-assembly buffer 17 of the receiver 13 according to a second embodiment of the invention is shown, where the number of priority levels is two. In figure 5 a situation is shown, where there are two first segments 101a and 102a and a number of corresponding Continuation segments of two L2CAP packets 101 and 102, respectively. The receiving L2CAP layer 12 maintains a counter of the number of first segments currently stored in the re-assembly buffer 17. The counter is incremented with one, when a new first segment is stored in the buffer. The counter is decremented with one whenever a first segment is deleted from the buffer. In the situation shown in figure 5, the counter has the value 2.

When a new first segment 103 is received a comparison is performed whether there are already a number of first segments stored in the L2CAP re-assembly buffer equal to the number of priorities. In the situation shown in figure 5, this is the case, and thus the segments corresponding to the oldest L2CAP packet 101 until the next first segment 102a are flushed from the re-assembly buffer before the received first segment 103 is stored. This is depicted by a cross in figure 5. This flush policy compared to the flush policy of the first embodiment of the invention, delays the flushing of data, and thus may require a larger re-assembly buffer 17.

## Claims

1. A method of communicating data packets from a transmitter to a receiver, the method comprising the steps of
dividing a first data packet of said data packets into a first set of segments;
transmitting the first set of segments by the transmitter;
receiving the first set of segments by the receiver;
storing the received first set of segments in a first storage means;
reassembling the first data packet from the stored first set of segments;
**characterised in that**
the method further comprises the steps of
assigning a first priority level to the first data packet;
if, during the step of transmitting the first set of segments after the transmission of a first subset of the first set of segments, a second data packet is assigned a higher priority level than the first priority level, performing the steps of
g) suspending transmitting the first set of segments;
h) transmitting the second set of segments by the transmitter;
i) receiving the second set of segments by the receiver;
j) storing the received second set of segments in the first storage means;
k) reassembling the second data packet from the stored second set of segments; and
1) resuming the suspended transmission of the first set of segments;
deleting all segments of the first subset of segments, which are stored in the first storage means, from the first storage means upon occurrence of a predetermined event.

2. The method according to claim 1, **characterised in that** the step of reassembling a selected one of the first and the second data packets further comprises the step of selectively deleting the corresponding first or second set of segments from the first storage means.

3. The method according to 1 or 2, **characterised in that** the step of transmitting the second set of segments by the transmitter is completed before the step of resuming the suspended transmission of the first set of segments is initiated.

4. The method according to any one of the claims 1 through 3, **characterised in that** if after the step of transmitting the second set of segments by the transmitter there are suspended transmissions of a plurality of sets of segments pending, the plurality of sets of segments comprises a set of segments with highest priority and the suspended transmission of the set of segments with highest priority is resumed.

5. The method according to any one of the claims 1 through 4, **characterised in that** the step of dividing a selected one of the first and second data packets into the corresponding first or second set of segments further comprises the step of storing at least a part of the corresponding first or second set of segments in a second storage means, and if during the step of transmitting the second set of segments a predetermined transmission timeout event occurs, all segments of the second set of segments and of the first set of segments, which are stored in the second storage means, are deleted from the second storage means.

6. The method according to any one of the claims 1 through 5, **characterised in that** the first and second priority levels are selected from a set of priority levels comprising a number of possible priority levels; and the first storage means is adapted to store at least a predetermined number of sets of segments of a predetermined size, the predetermined number of sets of segments corresponding to the number of possible priority levels.

7. The method according to claim 6, **characterised in that** each priority level of said number of possible priority levels corresponds to a respective predetermined timeout limit.

8. The method according to any one of the claims 1 through 7, **characterised in that** the step of transmitting a selected one of the first and second sets of segments comprises the step of storing at least one segment of the corresponding first or second set of segments in a third storage means; and if a predetermined transmission timeout event occurs, all segments of the corresponding first or second set of segments, which are stored in the third storage means, are selectively deleted from the third storage means.

9. The method according to any one of the claims 1 through 8, **characterised in that** if during the step of transmitting a selected one of the first and second set of segments a predetermined transmission timeout event occurs, the transmitter sends a notification to the receiver.

10. The method according to claim 9, **characterised in that** the notification is encoded into a segment which is transmitted after the predetermined transmission timeout event has occurred.

11. The method according to claim 9 or 10, **characterised in that** the notification is encoded as '00' in an L_CH code of an ACL payload header.

12. The method according to any one of the claims 9 through 11, **characterised in that** the notification is encoded as '00' in an L_CH code of a packet boundary field of a baseband packet at the receiver.

13. The method according to any one of the claims 9 through 12, **characterised in that** the predetermined event is a reception of the notification by the receiver, and when the notification is received by the receiver all segments stored in the first storage means are deleted from the first storage means.

14. The method according to any one of the claims 1 through 8, **characterised in that** the predetermined event is a reception of an initial segment of a third set of segments by the receiver when the number of subsets of segments which are stored in the first storage means corresponds to the number of possible priority levels.

15. A communication system for communicating data packets from a transmitter to a receiver, the system comprising
first processing means adapted to divide a first data packet of said data packets into a first set of segments;
transmitting means adapted to transmit the first set of segments;
receiving means adapted to receive the first set of segments;
first storage means adapted to store the received first set of segments;
second processing means adapted to reassemble the first data packet from the stored first set of segments;
**characterised in that**
the system further comprises third processing means adapted to assign a first priority level to the first data packet;
the transmitting means is adapted to suspend the transmission of the first set of segments after a first subset of the first set of segments has been transmitted, to transmit a second set of segments corresponding to a second data packet of said data packets with a higher priority level than the first data packet, and to resume the suspended transmission of the first set of segments; and
the second processing means is adapted to delete all segments of the first subset of segments, which are stored in the first storage means, from the first storage means, if a predetermined event occurs.

16. The system according to claim 15, **characterised in that** the second processing means is adapted to selectively delete a selected one of the first and second sets of segments from the first storage means when reassembling the corresponding first or second data packet.

17. The system according to claim 15 or 16, **characterised in that** the transmitting means is adapted to complete transmitting the second set of segments before resuming the suspended transmission of the first set of segments.

18. The system according to any one of the claims 15 through 17, **characterised in that** if after transmitting the second set of segments by the transmitter there are suspended transmissions of a plurality of sets of segments pending, the plurality of sets of segments comprises a set of segments with highest priority and the transmitter is adapted to resume the suspended transmission of the set of segments with highest priority.

19. The system according to any one of the claims 15 through 18, **characterised in that** the system further comprises a second storage means adapted to store at least a part of a selected one of the first and second set of segments, and if a predetermined transmission timeout event occurs when transmitting the second set of segments, the first processing means is adapted to delete all segments of the first and second sets of segments, which are stored in the second storage means, from the second storage means.

20. The system according to any one of the claims 15 through 19, **characterised in that** the first and second priority levels are selected from a set of priority levels comprising a number of possible priority levels; and the first storage means is adapted to store at least a predetermined number of sets of segments of a predetermined size, the predetermined number of sets of segments corresponding to the number of possible priority levels.

21. The system according to claim 20, **characterised in that** each priority level of said number of possible priority levels corresponds to a respective predetermined timeout limit.

22. The system according to any one of the claims 15 through 21, **characterised in that** the system further comprises third storage means adapted to store at least one segment of a selected one of the first and second sets of segments; and if a predetermined transmission timeout event occurs, all segments of the corresponding first or second set of segments, which are stored in the third storage means, are selectively deleted from the third storage means.

23. The system according to any one of the claims 15 through 22, **characterised in that** the transmitter is adapted to send a notification to the receiver, if a predetermined transmission timeout event occurs.

24. The system according to claim 23, **characterised in that** the transmitter is adapted to encode the notification into a segment which is transmitted after the predetermined transmission timeout event has occurred.

25. The system according to claim 23 or 24, **characterised in that** the first processing means is adapted to encode the notification as '00' in an L_CH code of an ACL payload header.

26. The system according to any one of the claims 23 through 25, **characterised in that** the system further comprises a fourth processing means adapted to encode the notification as '00' in an L_CH code of a packet boundary field of a baseband packet.

27. The system according to any one of the claims 23 through 26, **characterised in that** the predetermined event is a reception of the notification by the receiver, and the second processing means is adapted to delete all segments stored in the first storage means when the notification is received by the receiver.

28. The system according to any one of the claims 15 through 27, **characterised in that** the predetermined event is a reception of an initial segment of a third set of segments by the receiver when the number of subsets of segments which are stored in the first storage means corresponds to the number of possible priority levels.

29. An apparatus for receiving data packets, the apparatus comprising
receiving means adapted to receive a first set of segments of a first data packet of said data packets;
first storage means adapted to store the received first set of segments;
first processing means adapted to reassemble the first data packet from the stored first set of segments;
**characterised in that**
the first storage means is adapted to store a plurality of sets of segments; and
the first processing means is adapted to delete a predetermined selection of segments of the first set of segments from the first storage means prior to reassembling the first data packet, if a predetermined event occurs.

30. The apparatus according to claim 29,
**characterised in that** the first processing means is adapted to selectively delete the first set of segments from the first storage means when reassembling the first data packet.

31. The apparatus according to claim 29 or 30,
**characterised in that** the predetermined event is a reception of a transmission failure notification by the receiver, and the second processing means is adapted to delete all segments stored in the first storage means when the notification is received by the receiver.

32. The apparatus according to claim 31,
**characterised in that** the apparatus further comprises a second processing means adapted to encode the transmission failure notification as '00' in an L_CH code of a Baseband packet header.

33. The apparatus according to any one of the claims 29 through 32, **characterised in that** the predetermined event is a reception of an initial segment of a second set of segments by the receiver when the number of subsets of segments which are stored in storage means is equal to a predetermined number.

34. An apparatus for transmitting data packets, the apparatus comprising
first processing means adapted to divide a first data packet of said data packets into a first set of segments;
transmitting means adapted to transmit the first set of segments;
**characterised in that**
the apparatus further comprises second processing means adapted to assign a first priority level to the first data packet;
the transmitting means is adapted to suspend the transmission of the first set of segments after a first subset of the first set of segments has been transmitted, to transmit a second set of segments corresponding to a second data packet of said data packets with a higher priority level than the first data packet, and to resume the suspended transmission of the first set of segments.

35. The apparatus according to claim 34,
**characterised in that** the transmitting means is adapted to complete transmitting the second set of segments before resuming the suspended transmission of the first set of segments.

36. The apparatus according to claim 34 or 35,
**characterised in that** if after transmitting the second set of segments by the transmitter there are suspended transmissions of a plurality of sets of segments pending, the plurality of sets of segments comprises a set of segments with highest priority and the transmitter is adapted to resume the suspended transmission of the set of segments with highest priority.

37. The apparatus according to any one of the claims 34 through 36, **characterised in that** the apparatus further comprises first storage means adapted to store at least a part of a selected one of the first and second set of segments, and if a predetermined transmission timeout event occurs when transmitting the second set of segments, the first processing means is adapted to delete all segments of the first and second sets of segments, which are stored in the first storage means, from the first storage means.

38. The apparatus according to any one of the claims 34 through 37, **characterised in that** the first and second priority levels are selected from a set of priority levels comprising a number of possible priority levels

39. The apparatus according to claim 38, **characterised in that** each priority level of said number of possible priority levels corresponds to a respective predetermined timeout limit.

40. The apparatus according to any one of the claims 34 through 39, **characterised in that** the apparatus further comprises second storage means adapted to store at least one segment of a selected one of the first and second sets of segments; and if a predetermined transmission timeout event occurs, all segments of the corresponding first or second set of segments, which are stored in the second storage means, are selectively deleted from the second storage means.

41. The apparatus according to any one of the claims 34 through 40, **characterised in that** the transmitter is adapted to send a notification, if a predetermined transmission timeout event occurs.

42. The apparatus according to claim 41,
**characterised in that** the transmitter is adapted to encode the notification into a segment which is transmitted after the predetermined transmission timeout event has occurred.

43. The apparatus according to claim 41 or 42,
**characterised in that** the first processing means is adapted to encode the notification as '00' in an L_CH code of an ACL payload header.

44. A transmitter for use in a communication system according to any one of the claims 15 through 28.
